# EUROPEAN PATENT APPLICATION

(11) **EP 3 016 083 A1**
(43) Date of publication of application: **04.05.2016**
(21) Application number: 15191704.4
(22) Date of filing: 27.10.2015
(51) Int. Cl.: G08C 17/00

(54) **SCENARIO MODE RECOMMENDING METHOD AND APPARATUS FOR SMART DEVICE**

(30) Priority: 29.10.2014 CN 201410594807
(71) Applicant: Xiaomi Inc., Beijing 100085 (CN)
(72) Inventor: FU, Qiang, Beijing 100085 (CN); WANG, Yang, Beijing 100085 (CN); REN, Qiao, Beijing 100085 (CN); ZHAO, Ming, Beijing 100085 (CN)
(74) Representative: Delumeau, François Guy

(57) **Abstract**

The present disclosure relates to a scenario mode recommending method and apparatus for a smart device. The method and apparatus include: acquiring (102) device information of at least one smart device bound to a user account; pushing (104), according to the device information of the at least one smart device, at least one predefined scenario mode profile matching with the device information of the at least one smart device to the user account, the scenario mode profile corresponding to a scenario mode; and defining (106) a scenario mode bound to the user account according to acquired scenario mode profile selection information of the user account.

## Description

### TECHNICAL FIELD

The present disclosure relates to the field of smart home control technologies, and more particularly, to a scenario mode recommending method and apparatus for a smart device.

### BACKGROUND

Household electric appliances have become indispensable in people's daily home lives. Most of traditional household electric appliances are controlled by people via touch control buttons or remotely via infrared remote controllers. With the development of the times, the household electric appliances in such traditional operation control mode fail to accommodate people's requirements on operation and control of the household electric appliances.

Conforming to this trend, people propose a concept of smart home. The smart home, based on dwelling, integrates all facilities associated with the home lives by using the comprehensive cable deployment technology, network communication technology, safety assurance technology, automation control technology, and audio and video technologies, to construct high-efficiency management system for dwelling facilities and household agenda affairs. As such, safety, convenience, comfort, and artistry of homes are improved, and an environmentally-friendly and energy-saving living environment is achieved. This concept has been extensively recognized as an overwhelming trend during the development course of the future household electric appliances.

### SUMMARY

Embodiments of the present disclosure provide a scenario mode recommending method and apparatus for a smart device. The following technical solutions are employed.

According to a first aspect, the invention relates to a scenario mode recommending method for a smart device. The method includes:
acquiring device information of at least one smart device bound to a user account;
pushing, according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to state parameter information collected by at least one first smart device; and
defining a scenario mode bound to the user account according to acquired scenario mode profile selection information of the user account.

In one embodiment, the scenario mode at least includes: user account information, device information of a bound smart device, a startup condition, and a to-be-executed task; wherein
the device information of the bound smart device includes device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

In one embodiment of the method:
the device information at least includes device ID information and device type information; and
the scenario mode profile at least includes: device type information of a bound smart device, and the startup condition and the to-be-executed task of the corresponding scenario mode; the device type information of the bound smart device including: device type information of at least one first smart device and at least one second smart device in the corresponding scenario mode.

In one embodiment of the method:
the acquiring device information of at least one smart device bound to a user account includes: acquiring user account information of the user account and the device information of the at least one smart device bound to the user account; the device information at least including device ID information and device type information;
the pushing, according to the device information of the at least one smart device, a predefined scenario mode profile matching with the device information of the at least one smart device to the user account includes:
   according to the acquired device type information of the at least one smart device bound to the user account, selecting a scenario mode profile matching with the device type information of the bound smart device, and pushing the selected scenario mode profile to the user account; and
   the defining a scenario mode bound to the user account according to acquired scenario mode profile selection information of the user account includes:
      defining, according to the acquired scenario mode profile selection information of the user account, a scenario mode corresponding to the scenario mode profile to be bound to the user account; the defined scenario mode being configured according to the acquired device information of the at least one smart device bound to the user account.

In one embodiment, the method includes:
acquiring state parameter information collected by at least one first smart device bound to a user account;
determining, according to the state parameter information, whether to trigger a predefined scenario mode, the scenario mode being configured to store an association relation for triggering operation control for at least one second smart device according to the state parameter information collected by the at least one first smart device; and
if it is determined to trigger the scenario mode, sending a corresponding control instruction to at least one second smart device bound to the user account according to the scenario mode, to control the second smart device to perform a corresponding operation.

In one embodiment, the scenario mode at least includes: user account information, device information of a bound smart device, a startup condition, and a to-be-executed task, wherein
the device information of the bound smart device includes device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

In one embodiment, the scenario mode further includes: a startup condition logical relation; wherein
the startup condition logical relation is configured to indicate a logical relation of state parameter information collected by each of the first smart device which serves as the condition for triggering the scenario mode; and
the determining, according to the state parameter information, whether to trigger a predefined scenario mode includes:
determining, according to the state parameter information, whether the state parameter information collected by the at least one first smart device satisfies the startup condition logical relation, and triggering the scenario mode if the startup condition logical relation is satisfied.

In one embodiment, the scenario mode further includes: a condition-task correlation table; wherein
the condition-task correlation table stores a corresponding relation between at least one group of startup conditions and to-be-executed tasks; and
the determining, according to the state parameter information, whether to trigger a predefined scenario mode includes:
determining, according to the state parameter information, whether the state parameter information collected by the at least one first smart device satisfies at least one group of startup conditions in the condition-task correlation table; and
triggering to-be-executed tasks corresponding to the startup conditions according to the condition-task correlation table, if at least one group of startup conditions in the condition-task correlation table are satisfied.

According to a second aspect, the invention relates to a smart device control method based on a scenario mode. The method includes:
acquiring state parameter information collected by at least one first smart device bound to a user account;
determining, according to the state parameter information, whether to trigger a predefined scenario mode, the scenario mode being configured to store an association relation for triggering operation control for at least one second smart device according to the state parameter information collected by the at least one first smart device; and
if it is determined to trigger the scenario mode, sending a corresponding control instruction to at least one second smart device bound to the user account according to the scenario mode, to control the second smart device to perform a corresponding operation.

According to a third aspect, the invention relates to a scenario mode recommending apparatus for a smart device. The recommending apparatus includes:
a device information acquiring module, configured to acquire device information of at least one smart device bound to a user account.
a scenario mode profile recommending module, configured to push, according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to state parameter information collected by at least one first smart device; and
a scenario mode defining module, configured to define a scenario mode bound to the user account according to acquired scenario mode profile selection information of the user account.

In one embodiment, the scenario mode at least includes: user account information, device information of a bound smart device, a startup condition, and a to-be-executed task, wherein
the device information of the bound smart device includes device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

In one embodiment, in the apparatus:
the device information at least includes device ID information and device type information;
the scenario mode profile at least includes: device type information of a bound smart device, and the startup condition and the to-be-executed task of the corresponding scenario mode; the device type information of the bound smart device including: device type information of at least one first smart device and at least one second smart device in the corresponding scenario mode.

In one embodiment, in the apparatus:
the device information acquiring module is further configured to acquire user account information of a user account and device information of at least one smart device bound to the user account; the device information at least including device ID information and device type information;
the scenario mode profile recommending module is further configured to select, according to the acquired device type information of the at least one smart device bound to the user account, a scenario mode profile matching with the device type information of the bound smart device of the scenario mode profile, and push the selected scenario mode profile to the user account; and
the scenario mode defining module is further configured to define, according to the acquired scenario mode profile selection information of the user account, a scenario mode corresponding to the scenario mode profile to be bound to the user account; the defined scenario mode being configured according to the acquired device information of the at least one smart device bound to the user account.

In one embodiment, the control apparatus includes:
a state parameter information acquiring module, configured to acquire state parameter information collected by at least one first smart device bound to a user account.
a scenario mode triggering module, configured to determine, according to the state parameter information, whether to trigger a predefined scenario mode, the scenario mode being configured to store an association relation for triggering operation control for at least one second smart device according to the state parameter information collected by the at least one first smart device; and
a control instruction sending module, configured to: if it is determined to trigger the scenario mode, send a corresponding control instruction to at least one second smart device bound to the user account according to the scenario mode, to control the second smart device to perform a corresponding operation.

Optionally, the scenario mode at least includes: user account information, device information of a bound smart device, a startup condition, and a to-be-executed task, wherein
the device information of the bound smart device includes device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

In one embodiment, the scenario mode further includes: a startup condition logical relation; wherein
the startup condition logical relation is configured to indicate a logical relation of state parameter information collected by each of the first smart devices, which serves as the condition for triggering the scenario mode;
the scenario mode triggering module includes a logical relation determining unit; wherein
the logical relation determining unit is configured to determine, according to the state parameter information, whether the state parameter information collected by the at least one first smart device satisfies the startup condition logical relation, and trigger the scenario mode if the startup condition logical relation is satisfied.

In one embodiment, the scenario mode further includes: a condition-task correlation table; wherein
the condition-task correlation table stores a corresponding relation between at least one group of startup conditions and to-be-executed tasks; and
the scenario mode triggering module includes a condition-task correlation table querying unit; wherein
the condition-task correlation table querying unit is configured to determine, according to the state parameter information, whether the state parameter information collected by the at least one first smart device satisfies at least one group of startup conditions in the condition-task correlation table, and trigger to-be-executed tasks corresponding to the startup conditions according to the condition-task correlation table if at least one group of startup conditions in the condition-task correlation table are satisfied.

According to a fourth aspect, the invention relates to a smart device control apparatus based on a scenario mode. The control apparatus includes:
a state parameter information acquiring module, configured to acquire state parameter information collected by at least one first smart device bound to a user account.
a scenario mode triggering module, configured to determine, according to the state parameter information, whether to trigger a predefined scenario mode, the scenario mode being configured to store an association relation for triggering operation control for at least one second smart device according to the state parameter information collected by the at least one first smart device; and
a control instruction sending module, configured to: if it is determined to trigger the scenario mode, send a corresponding control instruction to at least one second smart device bound to the user account according to the scenario mode, to control the second smart device to perform a corresponding operation.

According to a fifth aspect, the invention relates to an apparatus for use in scenario mode recommendation. The apparatus includes:
a processor; and
a memory for storing instructions executable by the processor;
wherein the processor is configured to:
   acquire device information of at least one smart device bound to a user account;
   push, according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to state parameter information collected by at least one first smart device; and
   define a scenario mode bound to the user account according to acquired scenario mode profile selection information of the user account.

According to a sixth aspect, the invention relates to an apparatus for use in smart device control. The apparatus includes:
a processor; and
a memory for storing instructions executable by the processor;
wherein the processor is configured to:
   acquire state parameter information collected by at least one first smart device bound to a user account;
   determine, according to the state parameter information, whether to trigger a predefined scenario mode, the scenario mode being configured to store an association relation for triggering operation control for at least one second smart device according to the state parameter information collected by the at least one first smart device; and
   if it is determined to trigger the scenario mode, send a corresponding control instruction to at least one second smart device bound to the user account according to the scenario mode, to control the second smart device to perform a corresponding operation.

In one particular embodiment, the steps of the method for recommending a scenario are determined by computer program instructions.

Consequently, according to a seventh aspect, the invention is also directed to a computer program for executing the steps of a method for recommending a scenario as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present disclosure may achieve the following beneficial effects:
The present disclosure provides a scenario mode recommending method for a smart device. Several scenario mode profiles are predefined on a server, and each scenario mode profile corresponds to a scenario mode. The server determines, according to acquired device information of a smart device bound to a user account, a scenario mode profile suitable for the user account, and pushes the matched scenario mode profile to the user account. The scenario mode is finally defined according to selection via the user account. With the scenario mode recommending method, a user may conveniently and quickly configure a scenario mode based on his or her bound smart device, rather than specifically defining an association relation, thereby reducing load of the user in defining a specific scenario mode.

It shall be appreciated that the above general description and the detailed description hereinafter are only illustrative, but not for limiting the present disclosure.

### BRIEF DESCRIPTION OF THE DRAWINGS

To clearly describe embodiments of the present disclosure, drawings that are to be referred for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a flowchart illustrating a scenario mode recommending method for a smart device according to an exemplary embodiment of the present disclosure;
FIG. 2A is a schematic diagram illustrating an interface for scenario mode recommending according to an exemplary embodiment of the present disclosure;
FIG. 2B is another schematic diagram illustrating an interface for scenario mode recommending according to an exemplary embodiment of the present disclosure;
FIG. 3 is a flowchart illustrating a smart device control method based on a scenario mode according to an exemplary embodiment of the present disclosure;
FIG. 4 is a schematic diagram illustrating a scenario mode recommending apparatus for a smart device according to an exemplary embodiment of the present disclosure;
FIG. 5 is a schematic diagram illustrating a smart device control apparatus based on a scenario mode according to an exemplary embodiment of the present disclosure; and
FIG. 6 is a block diagram illustrating a scenario mode recommending apparatus for a smart device according to an exemplary embodiment of the present disclosure.

The above drawings are used for illustrating the embodiments of the present disclosure, and more details will be given hereinafter. These drawings and textual descriptions are not intended to limit the scope defined in the present disclosure in any way, but intended to describe the inventive concept of the present disclosure, through specific embodiments, for a person skilled in the art.

### DETAILED DESCRIPTION

To make the objectives, technical solutions, and advantages of the present disclosure clearer, the present disclosure is further described in detail with reference to the accompany drawings. Apparently, embodiments described herein are merely some exemplary ones, rather than all the embodiments of the present disclosure. Based on the embodiments of the present disclosure, all other embodiments derived by persons of ordinary skill in the art without any creative efforts shall fall within the protection scope of the present disclosure.

It should be firstly noted that the electronic device involved in various embodiments of the present disclosure may be a mobile phone, a tablet computer, an electronic book reader, a Moving Picture Experts Group Audio Layer III (MP3) player, a Moving Picture Experts Group Audio Layer IV (MP4) player, a laptop computer, a desktop computer, and the like.

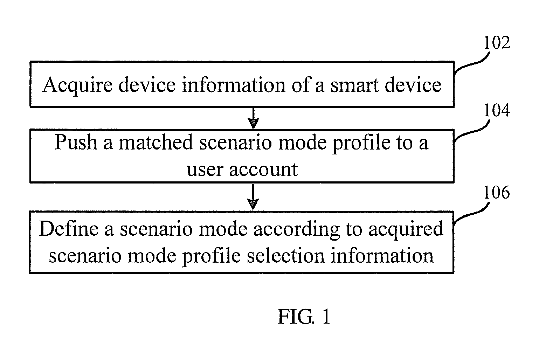

FIG. 1 is a flowchart illustrating a scenario mode recommending method for a smart device according to an exemplary embodiment of the present disclosure. This embodiment describes the method using an example that the recommending method is applied to a server. The smart scenario mode recommending method may include the following steps.

In step 102, device information of at least one smart device bound to a user account is acquired.

In step 104, according to the device information of the at least one smart device, at least one predefined scenario mode profile matching with the device information of the at least one smart device is pushed to the user account; wherein the scenario mode profile corresponds to a scenario mode; the scenario mode is configured to store an association relation for triggering operation control for at least one second smart device according to state parameter information collected by at least one first smart device.

In step 106, a scenario mode bound to the user account is defined according to acquired scenario mode profile selection information of the user account.

In conclusion, this embodiment provides a scenario mode recommending method for a smart device. Different smart devices may be associated by using scenario modes as media, such that the different smart devices achieve automatic linkage control based on an association relation defined for the scenario modes. According to the scenario mode recommending method, several scenario mode profiles are predefined on a server, and each scenario mode profile corresponds to a scenario mode. The server determines, according to acquired device information of a smart device bound to a user account, a scenario mode profile suitable for the user account, and pushes the matched scenario mode profile to the user account. The scenario mode is finally defined according to selection via the user account. According to the scenario mode recommending method, a user may conveniently and quickly configure a scenario mode based on his or her bound smart device, rather than specifically defining an association relation, thereby reducing load of the user in defining a specific scenario mode.

It should be noted that the scenario mode profile may be predefined on a server for a user to select, or may be a scenario mode profile uploaded by another user, which implements scenario mode sharing between users.

The smart device according to this embodiment is a smart home device. It should be noted that the scenario mode recommending method has great extensibility and compatibility, and any smart device capable of connecting to the Internet may all be applied to the corresponding scenario mode recommendation according to this embodiment.

The scenario mode at least includes: user account information, device information of a bound smart device, a startup condition, and a to-be-executed task.

The device information of the bound smart device may include device information of at least one first smart device and at least one second smart device that are bound to the user account; and the device information may include: device ID information and device type information. The device ID information may be a MAC address, an IP address, a serial number, or the like of a device. The device type information may be information indicative of the type of a device, for example, a smart socket, a smart camera, a smart TV, a smart air conditioner, or the like. Accordingly, different types of devices may collect different state parameter information, and correspond to different control instructions.

The startup condition is state parameter information collected by the at least one first smart device, which is a condition predefined for triggering the scenario mode. The collected state parameter information may vary depending on different device types. For example, a smart socket may collect current ON/OFF state of the socket, a smart camera may collect information indicating whether a moving object is present in a monitoring range, and a smart air conditioner may collect current indoor temperature, and current ON/OFF state and the like of the air conditioner. These state parameters may all be used as the state parameter information collected by the first smart device.

The to-be-executed task is a predefined corresponding control instruction sent to the at least one second smart device when the scenario mode is triggered. The corresponding control instructions may vary depending on different device types. For example, a smart socket may control ON/OFF state of the socket, and a smart air conditioner may control ON/OFF state, defined temperatures, and the like of the air conditioner.

Corresponding to the scenario mode, the scenario mode profiles according to the present disclosure are several scenario mode profiles predefined on a server side, whose startup conditions and to-be-executed tasks have been configured, such that a user may directly define scenario modes for a smart device bound to his or her user account based on the profiles.

Based on such disclosure, the scenario mode profile at least includes: device type information of a bound smart device, and the startup condition and the to-be-executed task of the corresponding scenario mode; the device type information of the bound smart device includes: device type information of at least one first smart device and at least one second smart device in the corresponding scenario mode.

The at least one first smart device is a smart device in the scenario mode configured to execute the startup conditions, and the at least one second smart device is a smart device in the scenario mode configured to execute the to-be-executed tasks.

Accordingly, in the scenario mode profile, the majority of content of the corresponding scenario mode has been predefined, and only the user account information and the device ID information of the device information of the bound smart device are not provided. During recommending a corresponding scenario mode to a user account, the scenario mode recommending method automatically supplements the above not-provided content for the user, that is, defining the scenario mode bound to the user account is completed.

Based on such disclosure, the scenario mode recommending method for a smart device according to the present disclosure may further include the following steps:
the acquiring device information of at least one smart device bound to a user account includes: acquiring user account information of the user account and the device information of the at least one smart device bound to the user account; the device information at least including device ID information and device type information;
the pushing, according to the device information of the at least one smart device, a predefined scenario mode profile matching with the device information of the at least one smart device to the user account includes:
   according to the acquired device type information of the at least one smart device bound to the user account, selecting a scenario mode profile matching with the device type information of the bound smart device, and pushing the selected scenario mode profile to the user account; and
   the defining a scenario mode bound to the user account according to acquired scenario mode profile selection information of the user account includes:
      defining, according to the acquired scenario mode profile selection information of the user account, a scenario mode corresponding to the scenario mode profile to be bound to the user account; the defined scenario mode being configured according to the acquired device information of the at least one smart device bound to the user account.

In this embodiment, the scenario mode profile is defined according to the type of the smart device. Different types of smart devices may provide different state parameter information as the startup conditions, and correspond to different control instructions. Therefore, a certain scenario mode profile is only applicable with respect to a specific type of smart device; otherwise, the scenario mode profile may not be used. Just based on this, this embodiment provides a scenario mode profile recommending method. Firstly, the device information of the smart device bound to the user account is acquired, and thus the user's currently available device type is acquired. Then, the scenario mode profiles are screened in a scenario mode profile library according to the device type information. Only when the first smart device and the second smart device in the scenario mode profile are simultaneously bound to the user, the scenario mode profile is pushed to the user account. When the user makes a selection, since the device ID information is acquired according to the device information of the smart device, the server may define the scenario mode bound to the user account according to the scenario mode profile selected by the user. The user account information of the scenario mode is the user account information uploaded in step 102, the device information of the first smart device and the second smart device is device information of the corresponding types of smart devices in the scenario mode profile, and the startup conditions and the to-be-executed tasks are predefined in the scenario mode profile.

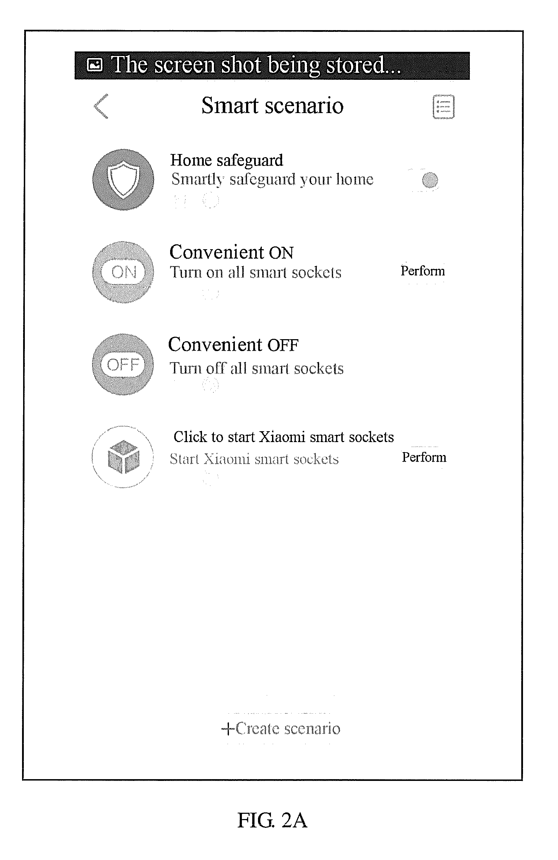

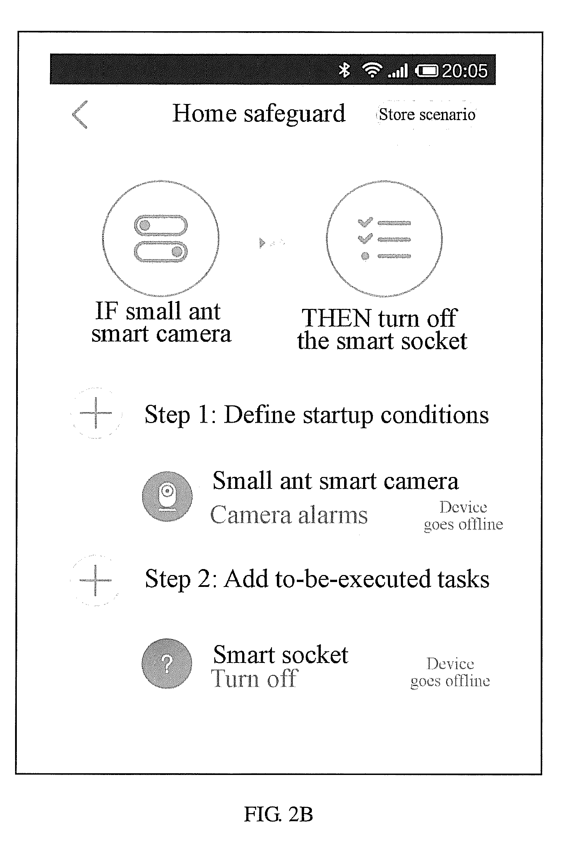

FIGS. 2A and 2B are schematic diagrams illustrating an interface for scenario mode recommending according to an exemplary embodiment of the present disclosure. As illustrated in FIGS. 2A and 2B, in this embodiment, a "home safeguard" scenario mode recommending example is given. The "home safeguard" scenario mode is a scenario mode profile defined by a server. In the scenario mode profile, it is defined that a first smart device type is "small ant smart camera", a second smart device type is "smart socket", a startup condition is camera alarming, and a to-be-executed task is turning off the smart socket. After a user account is bound to a smart device, the server acquires device type information of the smart device bound to the user account, and determines whether the user account is bound to the "small ant smart camera" and the "smart socket". When the user account is simultaneously bound to these two types of smart devices, the server pushes the matched "home safeguard" scenario mode profile to a user according to a search result. As illustrated in FIG. 2A, the user does not need to specifically configure the scenario mode, but needs to select to enable or disable the scenario mode. If the user selects to enable the "home safeguard" scenario mode, the "home safeguard" scenario mode may be automatically defined by configuration according to device information of the corresponding smart device bound to the user account, thereby implementing a linkage control relation between the "small ant smart camera" and the "smart socket" bound to the user account.

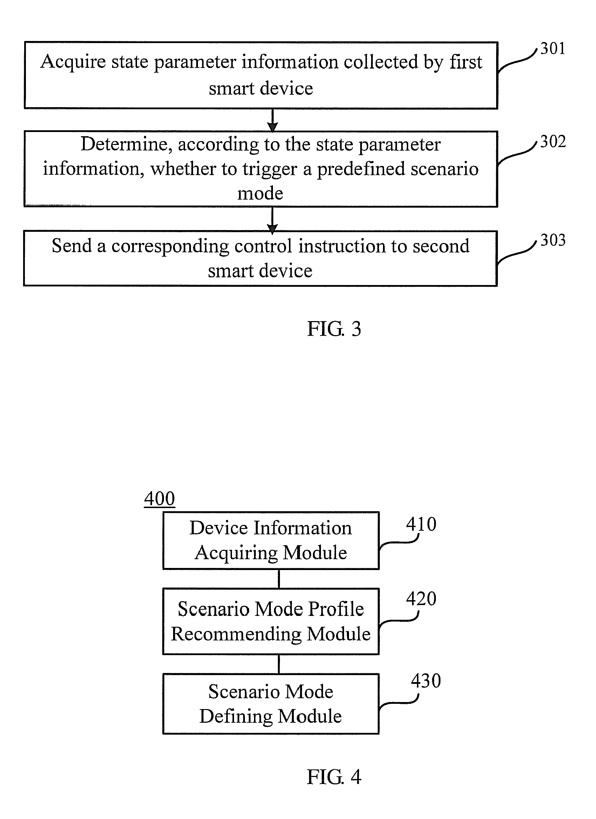

FIG. 3 is a flowchart illustrating a smart device control method based on a scenario mode according to an exemplary embodiment of the present disclosure. This embodiment describes the method using an example that the control method is applied to a server. The smart device control method may include the following steps.

In step 301, state parameter information collected by at least one first smart device bound to a user account is acquired.

In step 302, it is determined, according to the state parameter information, whether to trigger a predefined scenario mode, wherein the scenario mode is configured to store an association relation for triggering operation control for at least one second smart device according to the state parameter information collected by the at least one first smart device.

In step 303, if it is determined to trigger the scenario mode, a corresponding control instruction is sent to at least one second smart device bound to the user account according to the scenario mode, to control the second smart device to perform a corresponding operation.

In conclusion, the smart device control method according to this embodiment associates different smart devices by using scenario modes prestored on a cloud server as media, such that the different smart devices achieve automatic linkage control based on an association relation defined for the scenario modes. With the smart device control method, originally independent smart devices may be associated, and the application scenarios of the smart devices may be extended via a combination of the smart devices.

The smart device according to this embodiment is a smart home device. It should be noted that the smart device control method has great extensibility and compatibility, and any smart device capable of connecting to the Internet may all be applied to the smart device control method according to this embodiment.

The scenario mode at least includes: user account information, device information of a bound smart device, a startup condition, and a to-be-executed task.

The device information of the bound smart device includes device information of at least one first smart device and at least one second smart device that are bound to the user account; and the device information may include: device ID information and device type information. The device ID information may be a MAC address, an IP address, a serial number, or the like of the device. The device type information may be information indicative of the type of a device. For example, a smart socket, a smart camera, a smart TV, a smart air conditioner, or the like. Accordingly, different types of devices may collect different state parameter information, and correspond to different control instructions.

The startup condition is state parameter information collected by the at least one first smart device which is a condition predefined for triggering the scenario mode. The collected state parameter information may vary depending on different device types. For example, a smart socket may collect current ON/OFF state of the socket, a smart camera may collect information indicating whether a moving object is present in a monitoring range, and a smart air conditioner may collect current indoor temperature and ON/OFF state and the like of the air conditioner. These state parameters may all be used as the state parameter information collected by the first smart device.

The to-be-executed task is a predefined corresponding control instruction sent to the at least one second smart device when the scenario mode is triggered. The corresponding control instructions may vary depending on different device types. For example, a smart socket may control ON/OFF state of the socket, and a smart air conditioner may control ON/OFF state, defined temperatures, and the like of the air conditioner.

In this embodiment, a plurality of first smart devices are configured in the scenario mode. State parameter information corresponding to each of the plurality of first smart devices serve as one of factors, in the startup condition, for determining whether to trigger the scenario mode. Herein, two methods for determining whether to trigger the scenario mode under circumstances where a plurality of first smart devices are present are given.

### Method 1:

The scenario mode further includes: a startup condition logical relation. The startup condition logical relation is configured to indicate a logical relation of state parameter information collected by each of the first smart device which serves as the condition for triggering the scenario mode. The logical relation herein may be logical "and" or logical "or", or a combination logical form constituted by logical "and" and "or".

The determining, according to the state parameter information, whether to trigger a predefined scenario mode includes:
determining, according to the state parameter information, whether the state parameter information collected by the at least one first smart device satisfies the startup condition logical relation, and triggering the scenario mode if the startup condition logical relation is satisfied.

With the method, the state parameter information collected by each first smart device is used as a factor for determining whether to trigger the scenario mode. It is determined whether to trigger a scenario mode by establishing a logical expression between the factors.

### Method 2:

The scenario mode further includes: a condition-task correlation table. The condition-task correlation table stores a corresponding relation between at least one group of startup conditions and to-be-executed tasks.

The determining, according to the state parameter information, whether to trigger a predefined scenario mode includes:
determining, according to the state parameter information, whether the state parameter information collected by the at least one first smart device satisfies at least one group of startup conditions in the condition-task correlation table; and
triggering to-be-executed tasks corresponding to the startup conditions according to the condition-task correlation table, if at least one group of startup conditions in the condition-task correlation table are satisfied.

With the method, a condition-task correlation table is established in the scenario mode to determine a corresponding relation between startup conditions and to-be-executed tasks. Different startup conditions and different to-be-executed tasks are managed via the correlation table.

Apparatus embodiments of the present disclosure are described hereinafter, wherein the apparatuses may be used to perform the method embodiments. Details that are not disclosed in the apparatus embodiments of the present disclosure, reference may be made to the method embodiments of the present disclosure.

FIG. 4 is a schematic diagram illustrating a scenario mode recommending apparatus for a smart device according to an exemplary embodiment of the present disclosure. The recommending apparatus may be implemented via software, hardware or a combination of software and hardware as all or a part of an electronic device. The scenario mode recommending apparatus 400 for a smart device may include: a device information acquiring module 410, a scenario mode profile recommending module 420, and a scenario mode defining module 430.

The device information acquiring module 410 is configured to acquire device information of at least one smart device bound to a user account.

The scenario mode profile recommending module 420 is configured to push, according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to the state parameter information collected by the at least one first smart device.

The scenario mode defining module 430 is configured to define a scenario mode bound to the user account according to acquired scenario mode profile selection information of the user account.

Optionally, the scenario mode at least includes: user account information, device information of a bound smart device, a startup condition, and a to-be-executed task, wherein
the device information of the bound smart device includes device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

Optionally, in the method:
the device information at least includes device ID information and device type information;
the scenario mode profile at least includes: device type information of a bound smart device, and the startup condition and the to-be-executed task of the corresponding scenario mode; the device type information of the bound smart device including: device type information of at least one first smart device and at least one second smart device in the corresponding scenario mode.

In conclusion, this embodiment provides a scenario mode recommending apparatus for a smart device. Different smart devices may be associated by using the scenario modes as media, such that the different smart devices achieve automatic linkage control based on an association relation defined for the scenario modes. According to the scenario mode recommending apparatus, several scenario mode profiles are predefined on a server, and each scenario mode profile corresponds to a scenario mode. The server determines, according to acquired device information of a smart device bound to a user account, a scenario mode profile suitable for the user account, and pushes the matched scenario mode profile to the user account. The scenario mode is finally defined according to selection via the user account. With the scenario mode recommending apparatus, a user may conveniently and quickly configure a scenario mode based on his or her bound smart device, rather than specifically defining an association relation, thereby reducing load of the user in defining a specific scenario mode.

Based on such disclosure, in the scenario mode recommending apparatus 400 for a smart device according to the present disclosure:
the device information acquiring module 410 is further configured to acquire user account information of a user account and device information of at least one smart device bound to the user account; the device information at least including device ID information and device type information;
the scenario mode profile recommending module 420 is further configured to select, according to the acquired device type information of the at least one smart device bound to the user account, a scenario mode profile matching with the device type information of the bound smart device, and push the selected scenario mode profile to the user account; and

The scenario mode defining module 430 is further configured to define, according to the acquired scenario mode profile selection information of the user account, a scenario mode corresponding to the scenario mode profile to be bound to the user account; the defined scenario mode being configured according to the acquired device information of the at least one smart device bound to the user account.

This embodiment provides a scenario mode recommending apparatus 400. According to the scenario mode recommending apparatus 400, several scenario mode profiles are predefined on a server, and each scenario mode profile corresponds to a scenario mode. An association relation between a first smart device and a second smart device is predefined in the scenario mode profile. The scenario mode recommending apparatus 400 determines, according to acquired device information of a smart device bound to a user account, a scenario mode profile suitable for the user account, and pushes the matched scenario mode profile to the user account. The scenario mode is finally defined according to selection via the user account. With the scenario mode recommending apparatus 400, a user may conveniently and quickly configure a scenario mode based on his or her bound smart device, rather than specifically defining an association relation, thereby reducing load of the user in defining a specific scenario mode.

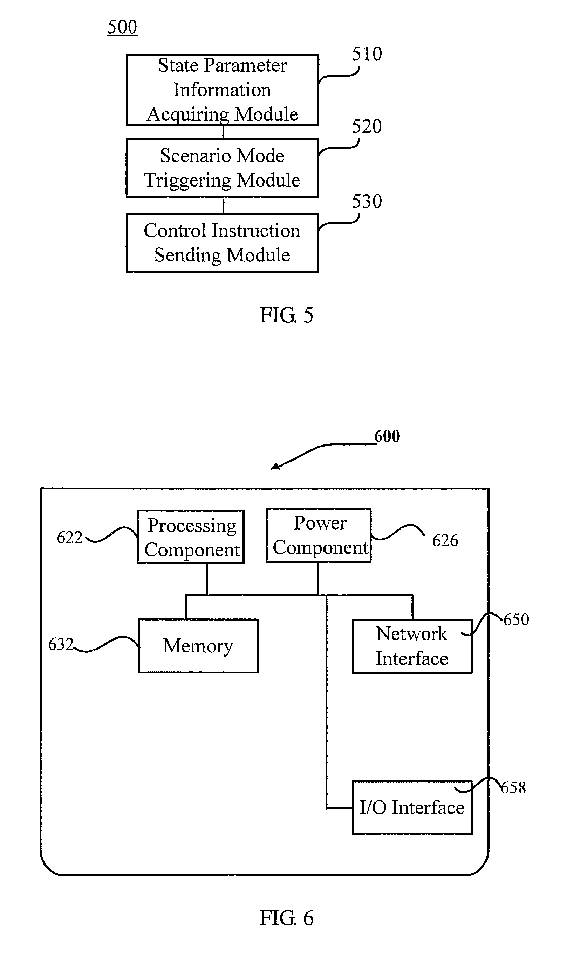

FIG. 5 is a schematic diagram illustrating a smart device control apparatus based on a scenario mode according to an exemplary embodiment of the present disclosure. The smart device control apparatus may be implemented via software, hardware or a combination of software and hardware as all or a part of an electronic device. The smart device control apparatus 500 based on a scenario mode may include: a state parameter information acquiring module 510, a scenario mode triggering module 520, and a control instruction sending module 530.

The state parameter information acquiring module 510 is configured to acquire state parameter information collected by at least one first smart device bound to a user account.

The scenario mode triggering module 520 is configured to determine, according to the state parameter information, whether to trigger a predefined scenario mode, the scenario mode being configured to store an association relation for triggering operation control for at least one second smart device according to the state parameter information collected by the at least one first smart device.

The control instruction sending module 530 is configured to: if it is determined to trigger the scenario mode, send a corresponding control instruction to at least one second smart device bound to the user account according to the scenario mode, to control the second smart device to perform a corresponding operation.

Optionally, the scenario mode at least includes: user account information, device information of a bound smart device, a startup condition, and a to-be-executed task, wherein
the device information of the bound smart device includes device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

Optionally, the scenario mode further includes: a startup condition logical relation; wherein
the startup condition logical relation is configured to indicate a logical relation of state parameter information collected by each of the first smart device which serves as the condition for triggering the scenario mode; and
the scenario mode triggering module 520 includes a logical relation determining unit; wherein
the logical relation determining unit is configured to determine, according to the state parameter information, whether the state parameter information collected by the at least one first smart device satisfies the startup condition logical relation, and trigger the scenario mode if the startup condition logical relation is satisfied.

Optionally, the scenario mode further includes: a condition-task correlation table; wherein
the condition-task correlation table stores a corresponding relation between at least one group of startup conditions and to-be-executed tasks; and
the scenario mode triggering module 520 includes a condition-task correlation table querying unit; wherein
the condition-task correlation table querying unit is configured to determine, according to the state parameter information, whether the state parameter information collected by the at least one first smart device satisfies at least one group of startup conditions in the condition-task correlation table, and trigger to-be-executed tasks corresponding to the startup conditions according to the condition-task relation correlation table if at least one group of startup conditions in the condition-task correlation table are satisfied.

In conclusion, the smart device control apparatus according to this embodiment associates different smart devices by using prestored scenario modes as media, such that the different smart devices achieve automatic linkage control based on an association relation defined for the scenario modes. With the smart device control apparatus, originally independent smart devices may be associated, and the application scenarios of the smart devices may be extended via a combination of the smart devices.

FIG. 6 is a block diagram illustrating a scenario mode recommending apparatus 600 for a smart device according to an exemplary embodiment of the present disclosure. For example, the apparatus 600 may be provided as a server. Referring to FIG. 6, the apparatus 600 includes a processing component 622, which further includes one or more processors, and memory resources represented by a memory 632, configured to store instructions executable by the processing component 622, for example, applications. The applications stored in the memory 632 may include one or more than one module each corresponding to a group of instructions. In addition, the processing component 622 is configured to execute the instructions, to perform the above methods.

The apparatus 600 may further include: a power component 626, configured to perform power management in the apparatus 600; a wired or wireless network interface 650, configured to connect the apparatus 600 to the network; and an input/output (I/O) interface 658. The apparatus 600 may operate an operating system stored in the memory 632, for example, Windows ServerTM, Mac OS XTM, UnixTM, LinuxTM, FreeBSDTM, or the like.

A non-transitory computer-readable storage medium is provided. When instructions stored in the storage medium are executed by a processor of the apparatus 600, the apparatus 600 is caused to perform a scenario mode recommending method as illustrated in FIG. 1, wherein the method includes:
acquiring device information of at least one smart device bound to a user account;
pushing, according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to state parameter information collected by at least one first smart device; and
defining a scenario mode bound to the user account according to acquired scenario mode profile selection information of the user account.

A non-transitory computer-readable storage medium is provided. When instructions stored in the storage medium are executed by a processor of the apparatus 600, the apparatus 600 is caused to perform a smart device control method as illustrated in FIG. 3, wherein the method includes:
acquiring state parameter information collected by at least one first smart device bound to a user account;
determining, according to the state parameter information, whether to trigger a predefined scenario mode, the scenario mode being configured to store an association relation for triggering operation control for at least one second smart device according to the state parameter information collected by the at least one first smart device; and
if it is determined to trigger the scenario mode, sending a corresponding control instruction to at least one second smart device bound to the user account according to the scenario mode, to control the second smart device to perform a corresponding operation.

## Claims

1. A scenario mode recommending method for a smart device, **characterized in that** the method comprises:
acquiring (102) device information of at least one smart device bound to a user account;
pushing (104), according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to state parameter information collected by at least one first smart device; and
defining (106) a scenario mode bound to the user account according to acquired scenario mode profile selection information of the user account.

2. The method according to claim 1, **characterized in that** the scenario mode at least comprises: user account information, device information of a bound smart device, a startup condition, and a to-be-executed task; wherein
the device information of the bound smart device comprises device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

3. The method according to claim 1 or 2, **characterized in that**:
the device information at least comprises device ID information and device type information; and
the scenario mode profile at least comprises: device type information of a bound smart device, and the startup condition and the to-be-executed task of the corresponding scenario mode; the device type information of the bound smart device comprising: device type information of at least one first smart device and at least one second smart device in the corresponding scenario mode.

4. The method according to claim 3, **characterized in that**:
the acquiring (102) device information of at least one smart device bound to a user account comprises: acquiring user account information of the user account and the device information of the at least one smart device bound to the user account; the device information at least comprising device ID information and device type information;
the pushing (104), according to the device information of the at least one smart device, a predefined scenario mode profile matching with the device information of the at least one smart device to the user account comprises:
according to the acquired device type information of the at least one smart device bound to the user account, selecting a scenario mode profile matching with the device type information of the bound smart device, and pushing the selected scenario mode profile to the user account; and
the defining (106) a scenario mode bound to the user account according to acquired scenario mode profile selection information of the user account comprises:
defining, according to the acquired scenario mode profile selection information of the user account, a scenario mode corresponding to the scenario mode profile to be bound to the user account; the defined scenario mode being configured according to the acquired device information of the at least one smart device bound to the user account.

5. The method according to any one of claims 2 to 4, further comprising:
acquiring (301) state parameter information collected by at least one first smart device bound to a user account;
determining (302), according to the state parameter information, whether to trigger a predefined scenario mode, the scenario mode being configured to store an association relation for triggering operation control for at least one second smart device according to the state parameter information collected by the at least one first smart device; and
if it is determined to trigger the scenario mode, sending (303) a corresponding control instruction to at least one second smart device bound to the user account according to the scenario mode, to control the second smart device to perform a corresponding operation.

6. The method according to claim 5, **characterized in that** the scenario mode further comprises: a startup condition logical relation; wherein
the startup condition logical relation is configured to indicate a logical relation of state parameter information collected by each of the first smart device which serves as the condition for triggering the scenario mode; and
the determining (302), according to the state parameter information, whether to trigger a predefined scenario mode comprises:
determining, according to the state parameter information, whether the state parameter information collected by the at least one first smart device satisfies the startup condition logical relation, and triggering the scenario mode if the startup condition logical relation is satisfied.

7. The method according to claim 5 or 6, **characterized in that** the scenario mode further comprises: a condition-task correlation table; wherein
the condition-task correlation table stores a corresponding relation between at least one group of startup conditions and to-be-executed tasks; and
the determining (302), according to the state parameter information, whether to trigger a predefined scenario mode comprises:
determining, according to the state parameter information, whether the state parameter information collected by the at least one first smart device satisfies at least one group of startup conditions in the condition-task correlation table; and
triggering to-be-executed tasks corresponding to the startup conditions according to the condition-task correlation table if at least one group of startup conditions in the condition-task correlation table are satisfied.

8. A scenario mode recommending apparatus for a smart device, **characterized in that** the recommending apparatus comprises:
a device information acquiring module (410), configured to acquire device information of at least one smart device bound to a user account;
a scenario mode profile recommending module (420), configured to push, according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to state parameter information collected by at least one first smart device; and
a scenario mode defining module (430), configured to define a scenario mode bound to the user account according to acquired scenario mode profile selection information of the user account.

9. The recommending apparatus according to claim 8, **characterized in that** the scenario mode at least comprises: user account information, device information of a bound smart device, a startup condition, and a to-be-executed task; wherein
the device information of the bound smart device comprises device information of at least one first smart device and at least one second smart device that are bound to the user account;
the startup condition is state parameter information collected by the at least one first smart device, which is a condition predefined for triggering the scenario mode; and
the to-be-executed task is a predefined corresponding control instruction sent to the at least one second smart device when the scenario mode is triggered.

10. The recommending apparatus according to claim 8 or 9, **characterized in that**:
the device information at least comprises device ID information and device type information;
the scenario mode profile at least comprises: device type information of a bound smart device, and the startup condition and the to-be-executed task of the corresponding scenario mode; the device type information of the bound smart device comprising: device type information of at least one first smart device and at least one second smart device in the corresponding scenario mode.

11. The recommending apparatus according to claim 10, **characterized in that**:
the device information acquiring module (410) is further configured to acquire user account information of a user account and device information of at least one smart device bound to the user account; the device information at least comprising device ID information and device type information;
the scenario mode profile recommending module (420) is further configured to select, according to the acquired device type information of the at least one smart device bound to the user account, a scenario mode profile matching with the device type information of the bound smart device, and push the selected scenario mode profile to the user account; and
the scenario mode defining module (430) is further configured to define, according to the acquired scenario mode profile selection information of the user account, a scenario mode corresponding to the scenario mode profile to be bound to the user account; the defined scenario mode being configured according to the acquired device information of the at least one smart device bound to the user account.

12. The recommending apparatus according to any one of claims 9 to 11, further comprising:
a state parameter information acquiring module (510), configured to acquire state parameter information collected by at least one first smart device bound to a user account;
a scenario mode triggering module (520), configured to determine, according to the state parameter information, whether to trigger a predefined scenario mode, the scenario mode being configured to store an association relation for triggering operation control for at least one second smart device according to the state parameter information collected by the at least one first smart device; and
a control instruction sending module (530), configured to: if it is determined to trigger the scenario mode, send a corresponding control instruction to at least one second smart device bound to the user account according to the scenario mode, to control the second smart device to perform a corresponding operation.

13. An apparatus for use in scenario mode recommendation, **characterized by** comprising:
a processor; and
a memory for storing instructions executable by the processor;
wherein the processor is configured to:
acquire device information of at least one smart device bound to a user account;
push, according to the device information of the at least one smart device, at least one predefined scenario mode profile matching with the device information of the at least one smart device to the user account; the scenario mode profile corresponding to a scenario mode; the scenario mode being configured to store an association relation for triggering operation control for at least one second smart device according to state parameter information collected by at least one first smart device; and
define a scenario mode bound to the user account according to acquired scenario mode profile selection information of the user account.

14. A computer program including instructions for executing the steps of a method for recommending a scenario operating a television application according to any one of claims 1 to 7 when said program is executed by a computer.

15. A recording medium readable by a computer and having recorded thereon a computer program including instructions for executing the steps of a method for recommending a scenario according to any one of claims 1 to 7.
